# EUROPÄISCHE PATENTANMELDUNG

(11) **EP 3 778 304 A1**
(43) Veröffentlichungstag der Anmeldung: **17.02.2021**
(21) Anmeldenummer: 20191412.4
(22) Anmeldetag: 17.08.2020
(51) Int. Cl.: B60Q 3/40, B60Q 3/59, F21V 21/14, B60Q 3/53

(54) **BELEUCHTUNGSSYSTEM**

(30) Priorität: 16.08.2019 DE 102019122091
(71) Anmelder: Hymer GmbH & Co. KG, 88339 Bad Waldsee (DE)
(72) Erfinder: Sawetzki, Bernhard, 88364 Wolfegg (DE); Hepe, Dominik, 68212 Ravensburg (DE)
(74) Vertreter: Waller, Stefan

(57) **Zusammenfassung**

Beleuchtungssystem (1), insbesondere zur Beleuchtung eines Innenraums (2) eines Fahrzeugs (3), vorzugsweise eines Reisemobils, Wohnwagens oder dergleichen, wobei das Beleuchtungssystem (1) wenigstens eine Leuchte (4) mit einem Leuchtenkorpus (12) und wenigstens einer stromzuführenden Leitung (6) umfasst und wobei das Beleuchtungssystem (1) zumindest ein Haltemittel (7) zum Halten der Leuchte (4) umfasst, wobei das Haltemittel (7) die Leuchte (4) in einem Halterahmen lösbar aufnimmt wobei die Leuchte (4) formschlüssig in zumindest zwei unterschiedlichen Orientierungen von dem Haltemittel (7) gehalten wird.

## Beschreibung

Die Erfindung betrifft ein Beleuchtungssystem für ein Fahrzeug gemäß Anspruch 1 sowie ein Fahrzeug mit Beleuchtungssystem gemäß Anspruch 5.

Beleuchtungssysteme sind aus dem Stand der Technik bekannt. In der Regel handelt es sich bei bekannten Beleuchtungssystemen um eine Kombination aus einer Leuchte, die in der Regel einen Leuchtenkorpus umfasst sowie ein Haltemittel, um die Leuchte zu halten. In bekannter Art und Weise wird als Haltemittel oftmals ein Haken oder dergleichen eingesetzt, mit dem die Leuchte beispielsweise an einer Zimmerdecke oder einer Zimmerwand befestigt werden kann. Diese Befestigung ist dabei in der Regel so gewählt, dass die Leuchte am Befestigungsort z.B. als Pendelleuchte über einem Tisch verbleiben soll. Darüber hinaus existieren Beleuchtungssysteme, bei welchen Leuchtmittel oder Leuchtkörper in Halterungen ortsfest angeordnet sind, und beispielsweise als Leselampen, Spot-Lichter oder Ambientelampen eingesetzt werden. Dabei sind die Leuchtmittel bzw. Leuchten mit den Halterungen fest verbunden und lassen ggf. am Ort der Halterung eine Veränderung der Leuchtrichtung des Leuchtmittels zu.

Es ist bei bekannten Beleuchtungssystemen - auch im Zusammenhang mit der Verwendung im Fahrzeug, insbesondere Reisemobil - als problematisch zu bewerten, dass eine flexible Nutzbarkeit, insbesondere Ortsveränderung des Beleuchtungssystems aufgrund fester Montage mittels Haltemittel nicht gegeben ist. Somit kann stets nur ein vorgegebener Bereich mittels des Beleuchtungssystems beleuchtet werden.

Aufgabe der Erfindung ist es daher, ein besonders flexibel einsetzbares Beleuchtungssystem für ein Fahrzeug bereitzustellen.

Aufgabe der Erfindung ist es weiterhin, ein Fahrzeug mit einem besonders flexibel einsetzbaren Beleuchtungssystem bereitzustellen.

Zur Lösung der Aufgabe wird ein Beleuchtungssystem, insbesondere zur Beleuchtung eines Innenraums eines Fahrzeugs, vorzugsweise eines Reisemobils, Wohnwagens oder dergleichen, vorgeschlagen, wobei das Beleuchtungssystem wenigstens eine Leuchte mit einem Leuchtenkorpus und wenigstens einer Befestigung, insbesondere stromzuführenden Leitung umfasst und wobei das Beleuchtungssystem zumindest ein Haltemittel zum Halten der Leuchte umfasst, wobei das Haltemittel die Leuchte in einem Halterahmen lösbar aufnimmt wobei die Leuchte formschlüssig in zumindest zwei unterschiedlichen Orientierungen bzw. Positionen bezüglich einer Beleuchtungsrichtung der Leuchte von dem Haltemittel gehalten wird.

Auf diese Art und Weise kann es ermöglicht werden, dass das Beleuchtungssystem verschiedene Orientierungen einnehmen kann. Unter Orientierungen kann z.B. eine Leuchtrichtung nach unten sowie durch Drehung der Leuchte um 180° eine Leuchtrichtung nach oben verstanden werden, wodurch ermöglicht werden kann, dass verschiedene Bereiche, z.B. im Fahrzeug, beleuchtet werden können. Darüber hinaus ist es auch möglich, die Leuchte an der Befestigung pendelnd hängend oder in der Halterung anzuordnen.

Die Beleuchtungsrichtung ist dabei diejenige Richtung, in welche die Leuchte ihr Licht aussendet und entspricht in der Regel der optischen Achse des Lichtkegels.

Dabei ist es von ganz besonderem Vorteil, dass diese flexible Nutzbarkeit des Beleuchtungssystems zur Beleuchtung verschiedener Bereiche ohne Demontage des Beleuchtungssystems ermöglicht werden kann. Dies kann dadurch erfolgen, dass das Beleuchtungssystem, welches z.B. mittels der Befestigung, z.B. einer stromzuführenden Leitung an einer Decke, z.B. Fahrzeugdecke, Zimmerdecke, etc. angeordnet ist (Deckenleuchte), oder in das Haltemittel eingesetzt und von diesem formschlüssig gehalten ist.

Sofern das Haltemittel an einer Wand, z.B. Fahrzeugwand, Zimmerwand, etc. angeordnet ist, kann das Beleuchtungssystem nunmehr als Wandleuchte verwendet werden. Ohne besonderen Montage- bzw. Demontageaufwand kann das Beleuchtungssystem bei Bedarf durch Entnahme aus dem Haltemittel wieder als Deckenleuchte bzw. Pendelleuchte gemäß vorstehender Ausführung einsetzbar sein.

In einer vorteilhaften Ausgestaltung der Erfindung kann vorgesehen sein, dass das zumindest eine Haltemittel eine zumindest teilweise rund ausgebildete Öffnung umfasst und der Leuchtenkorpus, zumindest abschnittsweise, derart gerundet ausgebildet ist, dass dieser in der zumindest einen Öffnung gehalten, insbesondere in einem konischen Sitz gehalten ist.

Dies stellt eine konstruktiv besonders einfach ausführbare Möglichkeit dar, die unterschiedlichen Orientierungen sicher anzubieten. Insbesondere während der Fahrt eines Reisemobils oder Wohnwagens sollte eine Leuchte nicht als Pendelleuchte angeordnet sein, da diese ansonsten den erhöhten dynamischen Belastungen aufgrund der Fahrbewegung ausgesetzt ist. Das formschlüssige, insbesondere konische Halten des Beleuchtungssystems in einem Haltemittel ist dabei vorteilhaft.

In einer besonders vorteilhaften Ausgestaltung der Erfindung kann vorgesehen sein, dass das zumindest eine Haltemittel als plattenförmiges Haltemittel ausgebildet ist und der Leuchtenkorpus wenigstens zwei im Wesentlichen konisch ausgebildete Korpusabschnitte umfasst, die zueinander gegen eine Längsrichtung der Leuchte spiegelsymmetrisch ausgebildet sind und insbesondere abschnittsweise voneinander verschiedene Durchmesser aufweisen.

Ein derart von dem Beleuchtungssystem getrennt ausgebildetes Haltemittel kann auf konstruktiv einfache Art und Weise formschlüssiges Halten des Beleuchtungssystems und damit eine flexible Verwendbarkeit des Beleuchtungssystems ermöglichen. Bei Nichtgebrauch kann das Haltemittel ggf. anderweitig, z.B. als Ablagemittel für Gegenstände oder Dekorationen (z.B. Pflanzen) Verwendung finden.

Die konischen Korpusabschnitte der Leuchte ermöglichen das Einsetzen in einen Haltekonus des Haltemittels in unterschiedlichen Orientierungen.

Eine Weiterbildung der Erfindung kann vorsehen, dass die wenigstens eine Leitung eine Länge aufweist, die wenigstens dem dreifachen Umfang des Leuchtenkorpus entspricht.

Dadurch kann ermöglicht werden, dass die Leitung, sofern die Leuchte in das Haltemittel eingesetzt wird, um den Leuchtenkorpus wickelbar und damit sicher verstaubar sein kann. Darüber hinaus ist der Radius der möglichen Anordnung der Leuchte erhöht, so dass diese z.B. hängend über einen Tisch, aber sogar durch ein Fenster nach außen, z.B. in einen Vorzeltbereich eines Wohnmobils oder Wohnwagens gehängt werden kann.

Weiterhin betrifft die Erfindung ein Fahrzeug, insbesondere Reisemobil, wobei das erfindungsgemäße Fahrzeug wenigstens ein erfindungsgemäßes Beleuchtungssystem umfasst. Die vorstehenden Angaben zur erhöhten Flexibilität des Beleuchtungssystems sowie weiteren Vorteile gelten in analoger Art und Weise für das erfindungsgemäße Fahrzeug.

Nachstehend wird die Erfindung anhand der Zeichnungen näher erläutert. Dabei zeigt die
- Fig. 1: einen Ausschnitt eines erfindungsgemäßen Fahrzeugs mit einem erfindungsgemäßen Beleuchtungssystem in zwei Positionszuständen und
- Fig. 2: einen dritten Positionszustand.

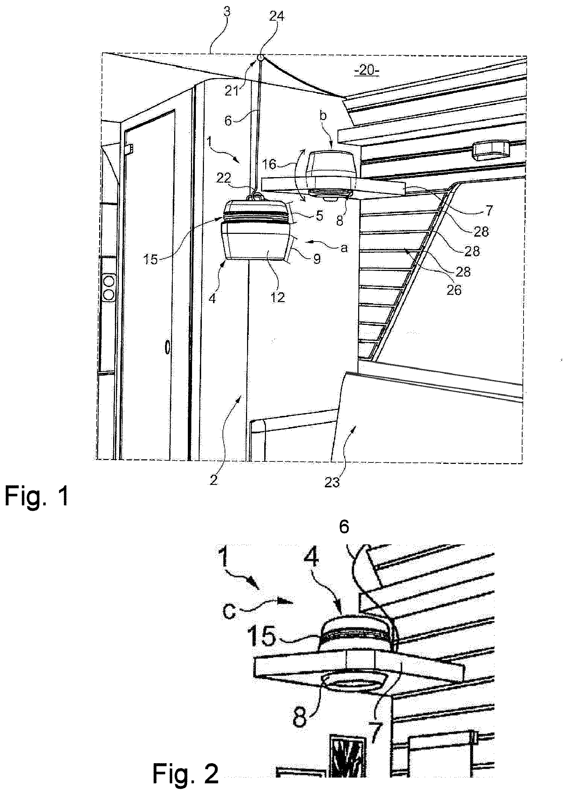

Die Fig. 1 zeigt eine vereinfachte Darstellung eines Ausschnitts eines erfindungsgemäßen Fahrzeugs mit einem erfindungsgemäßen Beleuchtungssystem in zwei verschiedenen Positionszuständen a und b Die fig. 2 zeigt einen dritten Positionszustand c.

Das Fahrzeug 3 ist vorliegend als Reisemobil bzw. Kastenwagen mit Wohnausbau ausgestaltet. Das Fahrzeug 3 umfasst einen Innenraum 2, welcher als Wohnraum genutzt wird und Möbelausbauten umfasst. In dem Innenraum 2 ist ein Beleuchtungssystem 1 angeordnet.

Das Beleuchtungssystem 1 umfasst eine Leuchte 4. Die Leuchte 4 umfasst einen Leuchtenkorpus 12, welcher die äußerliche Erscheinungsform der Leuchte 4 definiert. Die Leuchte 4 umfasst ferner eine Befestigung, welche vorliegend als stromzuführende Leitung 6 ausgebildet ist. Im Inneren des Leuchtenkorpus 12 umfasst die Leuchte 4 auch ein oder mehrere Leuchtmittel, z.B. LEDs.

In der als Position a dargestellten Einsatzsituation ist die Leuchte 4 als Pendelleuchte an der Leitung 6 pendelnd abgehängt. Dabei wird die Leitung 6 an einem Hängeende 21 an einem Deckenbereich 20 des Fahrzeugs 3 befestigt bzw. eingehängt, so dass die Leuchte 4 z.B. über einer Sitzgruppe 23 angeordnet werden kann. Die Leuchte hängt dabei an einem unteren zweiten Ende 22 der Leitung 6. Die Aufhängung 24 ist dabei so gestaltet, dass die Leitung 6 einfach ein- bzw. ausgehängt werden kann, um die Leuchte 4 auch in andere Betriebszustände b sowie c, letzterer dargestellt in der Fig. 2, (siehe unten) überführen zu können.

Das Beleuchtungssystem 1 umfasst weiterhin ein Haltemittel 7 zum Halten der Leuchte 4. Dabei ist das eine Haltemittel 7 derart ausgestaltet, dass die Leuchte 4 formschlüssig von dem Haltemittel 7 gehalten wird. Dieser Zustand ist in den Positionen b und c gegeben.

Im gezeigten Ausführungsbeispiel umfasst das Haltemittel 7 eine rund ausgebildete Öffnung 8. Der Leuchtenkorpus 12 ist dabei derart gerundet ausgebildet, dass dieser in der Öffnung 8 aufgenommen wird. Der Leuchtenkorpus 12 umfasst dabei zwei konisch geformte Korpusabschnitte 9 und 5, über welche der Leuchtenkorpus 12 in die Öffnung 8 eingreift und darin Sitz findet. Bevorzugt ist die Öffnung 8 mit einer entsprechenden Wandung in Form eines Gegenkonus ausgebildet, um einen guten, formschlüssigen Sitz bereit zu stellen.

In der dargestellten Position b ist die Leuchte 4 mit einer Leuchtrichtung nach oben eingesetzt. Dabei sitzt der Korpusabschnitt 5 in der Öffnung 8 des Haltemittels 7. Die Leitung 6 wird (vorliegend nicht dargestellt) in einer Nut 15 am Leuchtenkorpus 12 aufgewickelt und kann somit auf die notwendige Länge zur Anordnung der Leuchte 4 in dem Haltemittel 7 verkürzt werden.

In dem Ausführungsbeispiel ist das Haltemittel 7 als plattenförmiges Haltemittel ausgebildet. In einer bevorzugten Ausführungsform kann das Haltemittel 7 in Strukturen 25 an der Wandung 26 derart lösbar gehalten sein, dass eine Positionsveränderung des Haltemittel, z.B. ebenfalls durch Ein- und Aushängen in ein Nut-und Federsystem oder in einer sogenannten "Französischen Klampe" (French-Cleat), einfach und flexibel möglich ist.

Die Leitung 6 weist eine dem Einsatzzweck angepasste Länge auf, um die notwendigen Positionen a, b und c bereit zu stellen. Eine bevorzugte Länge ist dabei wenigstens der dreifache bis fünffache Umfang des Leuchtenkorpus 12, da diese Länge sich gut und bequem in der Nut 15 verstauen lässt und trotzdem die unterschiedlichen Positionen erreichbar macht.

Wird die Leuchte 4 in Position b in ihrer Orientierung durch Rotation 16 um 180° gedreht, so wird auch einer indirekten Deckenleuchte in Position b eine abwärts gerichtete Leuchte 4 in Position c, wie in Fig 2 dargestellt. Die Leuchte 4 ist dabei mit dem Korpusabschnitt 9 in dem Haltemittel 4 bzw. in der Öffnung 8 aufgenommen und ihre Lichtrichtung zeigt vorliegend nach unten in Richtung der Sitzgruppe 23. Die Leitung 6 kann auch hier in der Nut 15 verstaut werden, soweit sie in ihrer Länge nicht benötigt wird.

Die somit versetzbar ausgebildete Leuchte 4 kann flexibel als Pendelleuchte in Position a, Deckenleuchte in Position b und Leseleuchte in Position c genutzt werden, je nach Beleuchtungs-Bedürfnis. Zudem ist, z.B. auch bei ausreichender Länge der Leitung 6 oder bei Ausbildung eines angepassten Steckkontakts am Ende der Leitung denkbar, dass die Leuchte in den Außenbereich des Fahrzeugs überführt wird, um dort als Beleuchtung zu dienen.

In einer überdies bevorzugten Ausführungsform umfasst die Leuchte ein Energiespeichermittel, z.B. einen Akku, welcher über die Leitung als Pufferspeicher geladen wird und einen Betrieb der Leuchte außerhalb des Fahrzeugs, in einem dafür vorgesehenen Haltemittel, ohne zusätzliche Leitung 6 ermöglicht.

## Patentansprüche

1. Beleuchtungssystem, insbesondere zur Beleuchtung eines Innenraums (2) eines Fahrzeugs (3), vorzugsweise eines Reisemobils, Wohnwagens oder dergleichen, wobei das Beleuchtungssystem (1) wenigstens eine Leuchte (4) mit einem Leuchtenkorpus (12) und wenigstens einer stromzuführenden Leitung (6) umfasst und wobei das Beleuchtungssystem (1) zumindest ein Haltemittel (7) zum Halten der Leuchte (4) umfasst,
**dadurch gekennzeichnet,**
**dass** das Haltemittel (7) die Leuchte (4) in einem Halterahmen lösbar aufnimmt wobei die Leuchte (4) formschlüssig in zumindest zwei unterschiedlichen Orientierungen bzw. Positionen (b, c) bezüglich einer Beleuchtungsrichtung der Leuchte (4) von dem Haltemittel (7) gehalten wird.

2. Beleuchtungssystem nach Anspruch 1,
**wobei**
das Haltemittel (7) eine zumindest teilweise rund ausgebildete Öffnung (8) umfasst und wobei der Leuchtenkorpus (12), zumindest abschnittsweise derart gerundet ausgebildet ist, dass dieser in der zumindest einen Öffnung (8) gehalten, insbesondere in einem konischen Sitz gehalten ist.

3. Beleuchtungssystem nach Anspruch 2,
**wobei**
das zumindest eine Haltemittel (7) als plattenförmiges Haltemittel ausgebildet ist und wobei der Leuchtenkorpus (12) wenigstens zwei im Wesentlichen konisch ausgebildete Korpusabschnitte (5, 9) umfasst, die voneinander verschiedene Durchmesser aufweisen.

4. Beleuchtungssystem nach einem der vorhergehenden Ansprüche,
**wobei**
die wenigstens eine Leitung (6) eine Länge aufweist, die wenigstens dem dreifachen, bevorzugt wenigstens dem fünffachen des Umfangs des Leuchtenkorpus (12) entspricht.

5. Fahrzeug, insbesondere Reisemobil,
**wobei**
das Fahrzeug (3) wenigstens ein Beleuchtungssystem (1) nach einem der vorhergehenden Ansprüche umfasst.

6. Fahrzeug nach Anspruch 5,
**dadurch gekennzeichnet,**
**dass** die stromzuführende Leitung (6) an einem Hängeende (21) an einem Deckenbereich (20) des Fahrzeugs (3) befestigt ist und an einem zweiten Ende (22) an der Leuchte (4) befestigt ist und diese als Pendelleuchte hält und mit Strom versorgt.

7. Fahrzeug nach Anspruch 6,
**dadurch gekennzeichnet,**
**dass** die Befestigung der Leitung (6) an dem Deckenbereich (20) gegenüber dem Zentrum des Haltemittels (7) seitlich versetzt angeordnet, insbesondere um mindestens 30cm, bevorzugt 50cm oder mehr versetzt angeordnet ist.
